Europäisches Patentamt

European Patent Office

Office européen des brevets

(11) Publication number: **0 446 562 A1**

# EUROPEAN PATENT APPLICATION

(21) Application number: 90830102.1

(51) Int. Cl.⁵: **A01L 5/00**

(22) Date of filing: **13.03.90**

(43) Date of publication of application:
**18.09.91 Bulletin 91/38**

(84) Designated Contracting States:
**AT CH DE ES FR GB IT LI NL**

(71) Applicant: **Bresciani, Bruno**
**89, Via Zanardelli**
**I-25075 Cortine di Nave (Brescia)(IT)**

(72) Inventor: **Bresciani, Bruno**
**89, Via Zanardelli**
**I-25075 Cortine di Nave (Brescia)(IT)**

(74) Representative: **Manzoni, Alessandro**
**MANZONI & MANZONI - UFFICIO**
**INTERNAZIONALE BREVETTI P.le Arnaldo n.**
**2**
**I-25121 Brescia(IT)**

(54) Nonskid horseshoe.

(57) The invention concerns a horseshoe comprising a metal body (10) and a nonskid covering layer (11) applied at least to the bottom and side faces of said metal body, said nonskid covering layer (11) being made of rubber or similar material fixed on the metal body.

Fig.1

The present invention concerns horseshoes in general and in particular a horseshoe with a nonskid jacket.

Up to now horseshoes have always been made using exclusively metallic materials.

But that is just the reason why horses often meet some problems in maintaining their equilibrium when treading on asphalted and paved roads and the like. In fact, in such a case they may loose their grip and slip on the ground, thus causing a quite disagreable noise and also having some difficulties in going or running on.

It is therefore the scope of the present invention to propose a nonskid horseshoe allowing the solution of the above mentioned problems by ensuring the grip on the ground and a better balance of the horse and also reducing the wear and noisiness of iron horseshoes.

To this purpose the horseshoe according to the invention comprises a metal body and a nonskid layer covering at least its bottom and lateral faces, said nonskid layer being made of rubber or similar material and fixed to the metal body by vulcanization and/or fixing means.

The enclosed drawing shows an embodiment of the proposed horseshoe, which will be here under described in detail.

In said drawing:

Fig. 1    shows a perspective view of a nonskid horseshoe; and

Fig. 2    shows its sectional view.

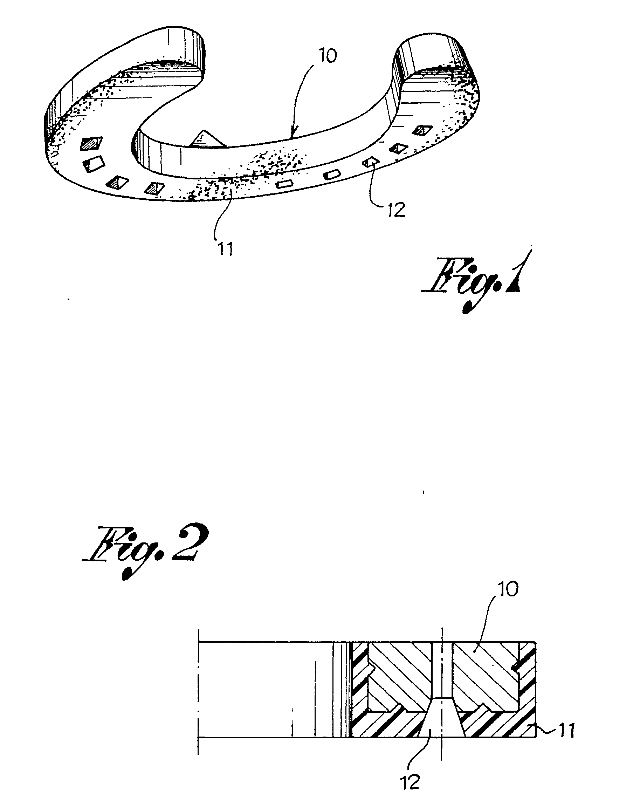

The horseshoe in question is composed of a suitably shaped metal body 10 and a nonskid covering layer 11. Said covering layer 11 may me made of rubber or of another similar material and is applied to the metal body 10 so as to cover at least its bottom and side faces. The covering layer is fixed and shaped on the metal body by vulcanization and/or by some fixing means, undercuts or wrinkles on the body itself. This compound horseshoe is also fitted with a row of holes 12 for the nails fixing the shoe on the horse's hoof and once it is applied it will allow the horse to comfortably tread on any kind of pavement, without being subject to a substantial wear and without skidding owing to its adherence to the ground.

## Claims

1. A horseshoe comprising a metal body and characterized by a nonskid covering layer applied to at least the bottom and side faces of said metal body.

2. Horseshoe according to claim 1), in which the nonskid covering layer is made of rubber or similar material fixed on the metal body.

3. Horseshoe according to claims 1) and 2), in which the nonskid covering layer is fixed on the metal body by vulcanization and/or suitable fixing means or undercuts worked into said body.

*Fig. 1*

*Fig. 2*

European Patent
Office

**EUROPEAN SEARCH REPORT**

Application Number

EP    90 83 0102

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | DE-C-012039 (LUDECKE) <br> * the whole document * <br> --- | 1-3 | A01L5/00 |
| X | FR-A-1506995 (ZAUGG) <br> * claim F; figures 1, 5, 7 * <br> --- | 1-3 | |
| X | CH-A-199071 (GÖTTI) <br> * the whole document * <br> --- | 1-3 | |
| X | DE-C-040476 (LUDECKE) <br> * the whole document * <br> ----- | 1-3 | |

| | |
|---|---|
| | TECHNICAL FIELDS SEARCHED (Int. Cl.5 ) |
| | A01L |

The present search report has been drawn up for all claims

| Place of search | Date of completion of the search | Examiner |
|---|---|---|
| THE HAGUE | 11 OCTOBER 1990 | VON ARX V.U. |

EPO FORM 1503 03.82 (P0401)